# EUROPEAN PATENT SPECIFICATION

(11) **EP 0 444 498 B1**
(45) Date of publication and mention of the grant of the patent: **17.05.1995**
(21) Application number: 91102281.2
(22) Date of filing: 18.02.1991
(51) Int. Cl.: B01L 9/00, G01N 35/10

(54) **Vial locator and sensor**
Positioniervorrichtung und Sensor für Fläschchen
Dispositif de positionnement de fioles avec un capteur

(30) Priority: 28.02.1990 US 488569
(43) Date of publication of application: 04.09.1991
(73) Proprietor: THE PERKIN-ELMER CORPORATION, Norwalk Connecticut 06859-0181 (US)
(72) Inventor: Pennato, Samson, Danbury, Ct. 06810 (US)
(74) Representative: Grünecker, Kinkeldey, Stockmair & Schwanhäusser Anwaltssozietät

(56) References cited:
- GB-A- 2 137 526
- US-A- 4 478 095
- US-A- 4 539 855

## Description

### FIELD OF THE INVENTION

This invention relates generally to the automated locating of sample vials, and more particularly to automatically positioning a sample vial loosely placed in a carousel for use in automated analytical instruments, such as a gas chromatograph, as defined in the preamble of claim 1.

### BACKGROUND OF THE INVENTION

In analyzing materials a sealed vial containing a prepared sample is often used. To analyze a sample a portion is removed from the sealed vial, which has a septum, with a syringe. The syringe is then used to inject the sample into an analytical instrument such as a gas chromatograph. In the past this process has been done manually. However, there have been advances in automating this process. In one automatization technique the sample vials are loosely placed in a carousel having a plurality of holes. The rotating carousel can then position one of the sample vials under an automated syringe. The vials are typically manufactured with a rigid cap having a small central opening of approximately 4.8 mm (3/16 inches) in diameter disclosing a septum. The vials are usually placed within the carousel manually. For ease of insertion this requires that they be loosely held. This in combination with the range of tolerances necessary for the economical manufacture of sample vials results in the location of the septum to vary over a relatively large range.

In an automated system the precise location of the various components is necessary. In attempts to automate a vial sampling technique in analytical instruments, the positioning of the septum so that a needle of a syringe can be inserted has proven to be a problem. Without a mechanism for positioning the septum under the syringe needle, the syringe needle is often broken or bent. When the septum is not positioned correctly and the needle strikes the rigid cap, the needle can break or bend. Even when the septum is successfully located if the angle of incidence is too large the needle may not pierce the septum, but be deflected by it. This also results in the needle bending or breaking. This is especially true when thin needles are used as is often necessary. Conventional automated mechanisms for positioning items have proven to be too complex and bulky.

In the U.S. Patent No. 4,478,095, an automated autosampler mechanism is disclosed comprising means to stabilize a vial said means being mounted on a spring biased support wherein said mechanism also comprises driving means to select a certain vial out of a carousel. Devices for positioning and supporting the vials for the process of extraction of the samples from the vial are also described in the British Patent Application No. GB 2 137 526 A and the U.S. Patent No. 4,539,855.

It is an object of the present invention to provide a simple economical device for positioning a sample vial for use in analytical instruments, such as a gas chromatograph.

According to the present invention, this object is solved with an apparatus according to claim 1.

### SUMMARY OF THE INVENTION

The present invention is directed to a vial locator and positioner for use in analytical instruments, specifically a gas chromatograph. A cone shaped or hemispherical shaped locator body is biased to extend below a surface. The shaped locator body is positioned to come into contact with a sample vial loosely held in a rotating carousel. The shaped locator body portion has a longitudinal bore through which a syringe needle can extend. As the carousel and a syringe tower are positioned the biased locator body contacts the cap and recessed septum of the vial. The coaction of the vial and shaped locator body results in the vial septum being forced under the locator body. The syringe needle can then be inserted accurately into the septum preventing the needle form being bent or broken. The shaped locator body portion also acts as a needle guide. Additionally, associated with the shaped locator body is a sensor for determining if a vial is positioned below the locator. As a result, the sample vial is simply and accurately positioned below the syringe needle by the relative motion of the rotating carousel and the syringe tower.

Accordingly, it is an object of the present invention to position a loosely held vial.

It is a further object of the present invention to guide the syringe needle preventing the needle from being bent or broken.

It is yet another object of the present invention to incorporate a simple sensor to detect the existence of a vial before attempting to withdraw a sample.

It is an advantage of the present invention that it is a simple design having no complex parts.

It is a further advantage of the present invention that the device provides a self-centering type motion based on the relative movement of the carousel and the syringe tower.

It is a feature of the present invention that a biased shaped locator is used for positioning a vial.

These and other objects, advantages, and features will become readily apparent in view of the following more detailed description.

### BRIEF DESCRIPTION OF THE DRAWINGS

Fig. 1 is a schematic diagram of an analytical instrument system incorporating the present invention;
Fig. 2 is a cross-section of a sealed sample vial;
Fig. 3 diagrammatically illustrates a vial position;
Fig. 4 is a cross-section of one embodiment of the present invention;
Fig. 5 is a cross-section of another embodiment of the present invention;
Fig. 6 is a plan view of the embodiment illustrated in Fig. 5.

### DETAILED DESCRIPTION OF THE PREFERRED EMBODIMENTS

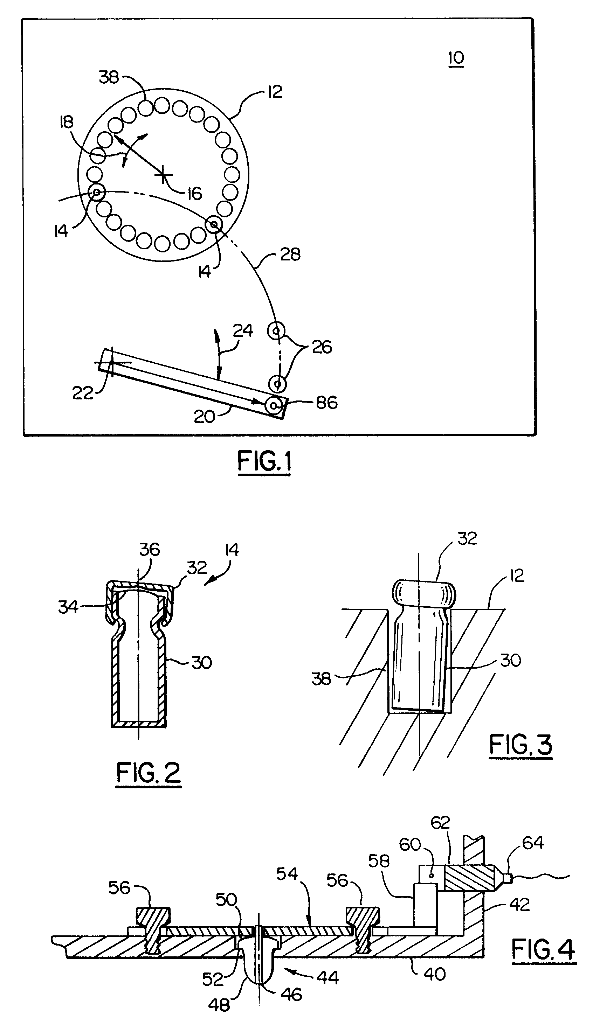

Fig. 1 is a schematic representation of an automated analytical instrument system incorporating the present invention. Located on a planar surface 10 is a carousel 12. Placed within carousel 12 are sample vials 14. The sample vials 14 are loosely positioned in recesses or holes 38. The carousel 12 rotates about center 16. The carousel 12 can rotate forward and backward as indicated by arrow 18. Also positioned on planar surface 10 is tower 20. The tower 20 rotates about a tower pivot 22. The tower 20 can rotate back and forth as indicated by arrow 24. Injectors 26 are located on the tower arc 28.

In operation, the analytical instrument illustrated in Fig. 1 samples any of the vials located in the carousel 12. On the tower 20 opposite the pivot 22 is positioned a syringe 86. The tower 20 pivots on pivot 22 along arc 28 positioning the syringe 86 over one of the vials 14. When the tower 20 positions the syringe 86 over one of the vials 14 a syringe needle withdraws a sample from one of the vials 14. The syringe 86 is then positioned by tower 20 over one of the injectors 26 where the sample is injected. Separate processing is then accomplished to analyze the sample. The carousel 12 is then rotated moving into position another sample contained in one of the vials 14.

Fig. 2 illustrates one of the sample vials 14. A glass container 30 contains the sample to be analyzed. A rigid cap 32 is crimped over a pliable septum 34. The rigid cap 32 has a hole 36 therein exposing a small portion of the septum 34. It is this small portion of the septum 34 through which the syringe needle must pierce before the removal of a sample.

Fig. 3 illustrates the position which a sample vial takes when placed in carousel 12. Carousel 12 has a plurality of recesses or holes 38 in which one of the vials 14 is placed. Recess or hole 38 is larger than the diameter of the container 30. For this reason the longitudinal axis of one of the vials 14 may be skewed with respect to the axis of the recess or hole 38. The precise position of one of the vials 14 in the carousel 12 is therefore unpredictable. This uncertainty as to the positioning of one of the vials 14 in carousel 12 is in addition to the uncertainties due to manufacturing tolerances in the positioning of the rigid cap 32 and cap hole 36 with respect to the container 30. The cap 32 can be placed off center on the container 30. Therefore, the position of the septum 34 can vary by relatively large amounts. However, the precise positioning of the syringe needle over the septum 34 exposed by the hole 36 requires the accurate positioning of the septum 34.

Fig. 4 illustrates one embodiment of the present invention. The lower portion of the tower 20 below syringe 86 illustrated in Fig. 1 is illustrated in Fig. 4. Support member 40 forms a portion of tower 20, illustrated in Fig. 1. Within support member 40 is a hole through which a shaped vial locator 44 is positioned. Vial locater 44 comprises a locator body having a radius 48. A bore 46 extends longitudinally through the vial locator 44. A ridge 50 rests on the shoulder 52 preventing the vial locator 44 from extending completely below support member 40. A leaf spring 54 rests on the top surface of ridge 50 holding the vial locator 44 in position. The vial locator 44 is biased by the leaf spring 54 into a position beneath the lower surface of support member 40. The leaf spring 54 is held in position by screws 56. Attached to the leaf spring 54 is a tab 58. Tab 58 is normally positioned below a sensor 60. Sensor 60 is attached to a sensor support 62 which in turn is connected to bracket 42 which forms a part of the support member 40. The sensor 60 can be any type of sensor, such as a mechanical switch, or an electromechanical switch, or a photodetector, for example. The electrical connector 64 is connected to the appropriate circuitry controlling other operations. One operation being the preventing of the taking of a sample if a vial is not present.

In operation, referring to Figs. 1-4, the tower 20 swings over one of the vials 14 in carousel 12. The rigid cap 32 then strikes radius 48 on the vial locator 44. The vial locator 44 is forced upward thereby deflecting leaf spring 54. The vial locator 44 will then work itself into the hole 36 of rigid cap 32 deflecting the septum 34. In this way, one of the vials 14 is located, positioned, and centered below the bore 46. A syringe needle can then be lowered through bore 46 and septum 34.

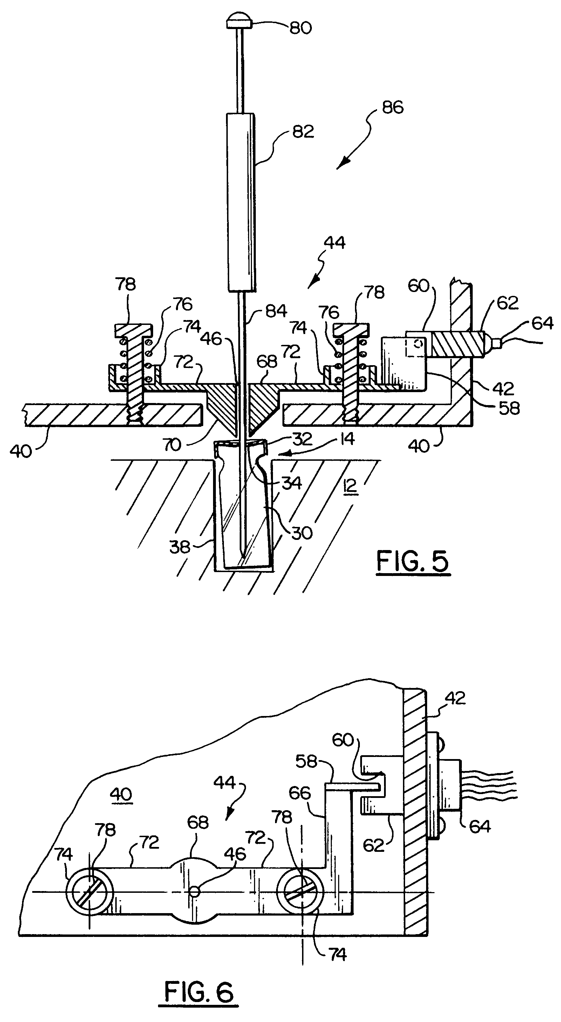

Figs. 5 and 6 illustrate a modified embodiment that uses helical spring biasing means rather than the leaf spring as illustrated in Fig. 4. The helical springs provide a greater range of vertical motion than provided by the leaf spring illustrated in Fig. 4. In Fig. 5 body portion 68 of vial locator 44 is connected to a cone 70. A cone of approximately 45 degrees has proven to work well. The body portion 68 is attached to a pair of arms 72. At the end of each arm 72, opposite the body portion 68, are a pair of spring cups 74. The spring cups 74 help retain the pair of helical springs 76. The springs 76 are retained by a pair of screws 78 which are attached to support member 40. The cone 70 is normally biased by springs 76 to extend below the surface of support member 40.

The operation of the embodiment illustrated in Fig. 5 can readily be appreciated. With reference to Figs. 1-3 and Fig. 5, when the tower 20, containing the support member 40, moves into position over carousel 12 the cone 70 strikes the rigid cap 32 and is raised up thereby. When the septum 34 is engaged the cone 70 will lower slightly due to the biasing of springs 76 and force one of the loosely held vials 14 into position. A syringe 86 having a syringe needle 84, a syringe body 82, and a syringe plunger 80 is then automatically positioned over the locator 44. The syringe needle 84 is inserted through bore 46 and septum 34 to withdraw a sample. The sample is injected into injectors 26 for further processing by the analytical instrument. To assist in the locating and positioning of one of the vials 14 the carousel 12 can be moved back and forth.
The back and forth motion can also be sequentially reduced to further assist in centering one of the vials 14. For example, the carousel 12 can initially move 7,9 mm (10/32 inches) counterclockwise, 6,4 mm (8/32 inches) clockwise, 4,8 mm (6/32 inches) counterclockwise, 3,2 mm (4/32 inches) clockwise, 1,6 mm (2/32 inches) counterclockwise, and 0,8 mm (1/32 inches) clockwise. This may be necessary to positively locate the septum which can be as small as 4.8 mm (3/16 inches) in diameter.

Fig. 6 illustrates another feature of the present invention. When the vial locator 44 strikes one of the vials 14 and is raised upward a tab 58 connected to the vial sensor by leg 66 is also raised upward. This interferes with a sensor 60 attached to a sensor support 62. The sensor 60 can be any sensor including an electromagnetic sensor or photosensor. The signal developed thereby is transferred by an electrical connector 64 to further control the operation of the analytical instrument system. The sensor is primarily used to detect the presence or absence of one of the vials 14. If one of the vials 14 is not in position the vial locator 44 will not cause the sensor 60 to emit a signal. Control circuits can then be implemented to prevent an attempt at taking a sample which could result in damage.

It should now be appreciated that the present invention provides an advance in automated sampling techniques for use in analytical instruments, such as gas chromatographs. This advance is provided in the form of a simple, yet effective device.

Although several embodiments have been illustrated and described, it will be obvious to those skilled in the art that various modifications may be made.

## Claims

1. A vial locator for locating and positioning a loosely held vial (14) having a rigid cap (32) with an exposed recessed flexible septum (34) before said septum is pierced by a needle comprising:
a support member (40) having a bottom surface;
a body portion (44, 68) to engage said vial cap whereby said body portion (44, 68) has a dimension smaller than the exposed recessed flexible septum (34) at the side contacting the septum and an increasing dimension at the side adjacent to the support member (40);
spring means (54, 76) acting between said body portion (44, 68) and said support member (40), for biasing said body portion (44, 68) in a position extending below said surface; and
motor means, associated with either said body portion (44, 68) or said vial (14), for moving said body portion (44, 68) relative to said vial (14) permitting contact therebetween on the septum (34);
said body portion is extending below said surface of said support member (40); and
a sensor (60) for detecting a movement of said body portion relative to said support member (40) is provided.

2. A vial locator as in claim 1 wherein:
said body portion (44) extending below said surface is semispherical-shaped.

3. A vial locator as in claim 1 wherein:
said body portion (68) extending below said surface is cone-shaped.

4. A vial locator as in claim 3 wherein:
the sides of said body portion (68) are angled 45 degrees.

5. A vial locator as in claim 1 wherein:
said spring means (54) comprises a leaf spring.

6. A vial locator as in claim 1 wherein:
said spring means (76) comprises at least one helical spring.

7. A vial locator as in claim 1 wherein:
said motor means is capable of moving said body portion (44,68) repeatedly back and forth relative to said vial.

8. A vial locator as in claim 7 further comprising:
control means, associated with said motor means, for moving said body portion (44,68) back and forth relative to said vial (14) by sequentially reduced back and forth motions.

9. A vial locator as in claim 1 wherein:
said sensor (60) comprises a photodetector.

10. A vial locator according to claims 1 to 9 or a combination thereof
**characterised in that**
said support member (40) is formed on a pivoted tower (20) having an opening on the end opposite the pivot (22);
said body portion (44,68) extends through said opening;
a shaped locator portion (48,70) is associated with said body portion (44,68) extending below said tower (20);
said body portion (44,68) and said shaped locator portion (48,70) have a longitudinal bore (46) therethrough;
said spring means (34,76) associated with said shaped locator (48,70) biasing said shaped locator below said tower (20);
a carousel (12) loosely accommodating said vials (14) is positioned in a plane below said tower (20) and said shaped locator (48,70) position, said plane being within a predetermined vial height range extending between the lower surface of said tower (20) and the lower surface of said shaped locator portion (48,70) when fully extended by said spring means (34,76);
a tower motor is provided capable of positioning said tower (20) over said carousel (12);
a carousel motor is provided capable of rotating said carousel (12) clockwise and counterclockwise; and
control means are provided, associated with said tower motor and said carousel motor, for controlling the relative movement therebetween whereby the coaction of their movements positions the septum (34) of one of the vials (14) under said bore (46).

11. A vial locator according to claims 1 to 10 or a combination thereof,
**characterised in that**
a pair of arms (72) extend perpendicularly from the longitudinal axis of said body portion on the end opposite said shaped portion (70) preventing said body portion from extending fully through said opening;
a pair of screws (78) is provided, one of said pair of said screws each extending slidably through one of said pair of arms (72) and secured to said support member (40);
a pair of helical springs (76) engage said arms (72), one each of said pair of screws (78) extending through one each of said helical springs, biasing said body portion (68) through said opening.

## Patentansprüche

1. Eine Fläschchenlokalisierungsvorrichtung zum Lokalisieren und Positionieren eines lose gehaltenen Fläschchens (14) mit einer festen Kappe (32), die ein freiliegendes, abgesenktes verformbares Septum (34) aufweist, bevor das Septum mit einer Nadel durchstochen wird, mit:
einem Halterungsteil (40) mit einer unteren Oberfläche;
einem Körperabschnitt (44, 68), der mit der Fläschchenkappe in Eingriff bringbar ist, wobei der Körperabschnitt (44, 68) an der das Septum berührenden Seite eine Größe aufweist, die kleiner ist als das freiliegende, abgesenkte vorformbare Septum (34), und an der an das Halterungsteil (40) angrenzenden Seite eine zunehmende Größe aufweist;
einer Federvorrichtung (54,76), die zwischen den Körperabschnitt (44, 68) und dem Halterungsteils (40) wirkt, zum Vorspannen des Körperabschnitts (44, 68) in eine unter die Oberfläche sich erstreckende Position; und
einer Motorvorrichtung, die mit entweder dem Körperabschnitt (44, 68) oder dem Fläschchen (14) in Beziehung steht, zum Bewegen des Körperabschnitts relativ zu dem Fläschchen (14), wodurch ein Kontakt zwischen diesen an dem Septum (34) ermöglicht wird;
wobei der Körperabschnitt unter die Oberfläche des Halterungsteils (40) vorsteht; und
wobei ein Sensor (60) zum Feststellen einer Bewegung des Körperabschnitts relativ zu dem Halterungsteil (40) vorgesehen ist.

2. Eine Fläschchenlokalisierungsvorrichtung nach Anspruch 1, wobei der Körperabschnitt (44), der sich unter die Oberfläche erstreckt, halbkugelförmig ist.

3. Eine Fläschchenlokalisierungsvorrichtung nach Anspruch 1, wobei der Körperabschnitt (68), der sich unter die Oberfläche erstreckt, kegelförmig ist.

4. Eine Fläschchenlokalisierungsvorrichtung nach Anspruch 3, wobei die Seiten des Körperabschnitts (68) einen Winkel von 45° aufweisen.

5. Eine Fläschchenlokalisierungsvorrichtung nach Anspruch 1, wobei die Federvorrichtung (54) eine Blattfeder umfaßt.

6. Eine Fläschchenlokalisierungsvorrichtung nach Anspruch 1, wobei die Federvorrichtung (76) wenigstens eine Schraubenfeder umfaßt.

7. Eine Fläschchenlokalisierungsvorrichtung nach Anspruch 1, wobei die Motorvorrichtung den Körperabschnitt (44, 68) wiederholt vor und zurück relativ zu dem Fläschchen bewegen kann.

8. Eine Fläschchenlokalisierungsvorrichtung nach Anspruch 7, weiter mit
einer Steuervorrichtung, die mit der Motorvorrichtung in Beziehung steht, zum Bewegen des Körperabschnitts (44, 68) vor und zurück relativ zu dem Fläschchen (14) um sequentiell verringerte Vor- und Zurückbewegungen.

9. Eine Fläschchenlokalisierungsvorrichtung nach Anspruch 1, wobei der Sensor (60) einen Photodetektor umfaßt.

10. Eine Fläschchenlokalisierungsvorrichtung nach den Ansprüchen 1 bis 9 oder einer Kombination daraus,
**dadurch gekennzeichnet, daß**
das Halterungsteil (40) an einem gelenkigen Turm (20) ausgebildet ist, der an dem dem Gelenk (22) gegenüberliegenden Ende eine Öffnung aufweist;
daß der Körperabschnitt (44, 68) durch die Öffnung sich erstreckt;
daß ein geformter Lokalisierungsabschnitt (44, 70) mit dem Körperabschanitt (44, 68) in Beziehung steht, der sich durch den Turm (20) erstreckt;
daß der Körperabschnitt (44, 68) und der geformte Lokalisierungsabschnitt (48, 70) in sich eine Längsausnehmung (46) aufweist;
daß die Federvorrichtung (34, 76), die mit der geformten Lokalisierungsvorrichtung (48, 70) in Beziehung steht, die geformte Lokalisierungsvorrichtung nach unterhalb des Turms (20) vorspannt;
daß ein Karussell (12), das die Fläschchen (14) locker aufnimmt, in einer Ebene unterhalb des Turms (20) und der Lage der geformten Lokalisierungsvorrichtung (48, 70) angeordnet ist, wobei die Ebene innerhalb eines vorbestimmten Fläschchenhöhenbereichs liegt, der sich zwischen der unteren Oberfläche des Turms (20) und der unteren Oberfläche des geformten Lokalisierungsabschnitts (48, 70) bei vollständigem Ausfahren durch die Federvorrichtung (34, 76) erstreckt;
daß ein Turmmotor vorgesehen ist, mit dem der Turm (20) über dem Karussell (12) positionierbar ist;
daß ein Karussellmotor vorgesehen ist, mit dem das Karussell (12) im und entgegen dem Uhrzeigersinn drehbar ist; und
daß eine Steuervorrichtung vorgesehen ist, die mit dem Turmmotor und dem Karussellmotor in Beziehung steht, zum Steuern der relativen Bewegung zwischen diesen, wobei das Zusammenwirken ihrer Bewegungen das Septum (34) eines der Fläschchen (14) unter der Ausnehmung (46) positioniert.

11. Eine Fläschchenlokalisierungsvorrichtung gemäß den Ansprüchen 1 bis 10 oder einer Kombination daraus,
**dadurch gekennzeichnet, daß**
ein Paar von Armen (72) senkrecht von der Längsachse des Körperabschnitts an dem dem geformten Abschnitt (70) gegenüberliegenden Ende absteht, das verhindert, daß der Körperabschnitt vollständig durch die Öffnung durchgefahren ist;
daß ein Paar von Schrauben (78) vorgesehen ist, wobei jede der Schrauben aus dem Paar von Schrauben sich jeweils verschiebbar durch einen der Arme aus dem Paar von Armen (72) erstreckt und an dem Halterungsteil (40) befestigt ist;
daß ein Paar von Schraubenfedern (76) mit den Armen (72) in Eingriff steht, wobei jede der Schrauben aus dem Paar von Schrauben (78) sich jeweils durch eine der Schraubenfedern erstreckt, die den Körperabschnitt (68) durch die Öffnung hindurch vorspannen.

## Revendications

1. Dispositif de positionnement de fioles pour placer et positionner une fiole maintenue sans serrage (14) comportant un couvercle rigide (32) avec une cloison souple exposée en dépression (34) avant que ladite cloison ne soit percée par une aiguille, comprenant:
un élément de support (40) ayant une surface inférieure ;
une partie de corps (44, 68) pour engager ledit couvercle de fiole de sorte que ladite partie de corps (44, 68) possède une dimension plus petite que la cloison souple exposée en dépression (34) au niveau du côté en contact avec la cloison et une dimension croissante au niveau du côté adjacent à l'élément de support (40) ;
un moyen de ressort (54, 76) agissant entre ladite partie de corps (44, 68) et ledit élément de support (40), pour rappeler ladite partie de corps (44, 68) dans une position s'étendant au-dessous de ladite surface ; et
un moyen de moteur , associé soit à ladite partie de corps (44, 68), soit à ladite fiole (14), pour déplacer ladite partie de corps (44, 68) relativement à ladite fiole (14) permettant d'établir un contact entre elle sur la cloison (34) ;
ladite partie de corps s'étendant au-dessous de ladite surface dudit élément de support (40) ; et
un capteur (60) étant prévu pour détecter un déplacement de ladite partie de corps relativement audit élément de support (40) .

2. Dispositif de positionnement de fioles selon la revendication 1, dans lequel :
ladite partie de corps (44) s'étendant au-dessous de ladite surface est de forme semi-sphérique .

3. Dispositif de positionnement de fioles selon la revendication 1, dans lequel :
ladite partie de corps (68) s'étendant au-dessous de ladite surface est de forme conique.

4. Dispositif de positionnement de fioles selon la revendication 3, dans lequel :
les côtés de ladite partie de corps (68) sont inclinés à 45° .

5. Dispositif de positionnement de fioles selon la revendication 1, dans lequel :
ledit moyen de ressort (54) comprend un ressort à lames .

6. Dispositif de positionnement de fioles selon la revendication 1, dans lequel :
ledit moyen de ressort (76) comprend au moins un ressort hélicoïdal.

7. Dispositif de positionnement de fioles selon la revendication 1, dans lequel :
ledit moyen de moteur est capable de déplacer ladite partie de corps (44,68) de façon répétitive d'avant en arrière par rapport à ladite fiole.

8. Dispositif de positionnement de fioles selon la revendication 7, comprenant de plus :
un moyen de commande , associé audit moyen de moteur, pour déplacer ladite partie de corps (44, 68) d'avant en arrière par rapport à ladite fiole (14) selon des déplacements d'avant en arrière progressivement réduits.

9. Dispositif de positionnement de fioles selon la revendication 1, dans lequel :
ledit capteur (60) comprend un photodétecteur.

10. Dispositif de positionnement de fioles selon les revendications 1 à 9, ou une combinaison de ces dernières ,
caractérisé en ce que
ledit élément de support (40) est monté sur un bras pivotant (20) possédant une ouverture à l'extrémité opposée de l'axe de pivotement (22) ;
ladite partie de corps (44, 68) s'étend à travers ladite ouverture ;
une partie profilée du dispositif de positionnement (48, 70) est associée à ladite partie de corps (44, 68) s'étendant au-dessous dudit bras (20) ;
ladite partie de corps (44, 68) et ladite partie profilée du dispositif de positionnement (48, 70) possèdent un trou longitudinal traversant (46);
ledit moyen de ressort (34, 76) associé audit dispositif de positionnement profilé (48, 70) rappelant ledit dispositif de positionnement profilé au-dessous dudit bras (20) ;
un carrousel (12) logeant sans serrage lesdites fioles (14) est situé dans un plan au-dessous dudit bras (20) et de ladite position du dispositif de positionnement profilé (48, 70), ledit plan étant dans une gamme de hauteur de fioles prédéterminée s'étendant entre la surface inférieure dudit bras (20) et la surface inférieure de ladite partie profilée du dispositif de positionnement (48, 70) lorsque celle-ci est en extension maximale à l'aide dudit moyen de ressort (34, 76) ;
un moteur pour le bras est prévu capable de positionner ledit bras (20) au-dessus dudit carrousel (12);
un moteur pour le carrousel est prévu capable de faire tourner ledit carrousel (12) dans le sens des aiguilles d'une montre et dans le sens contraire ; et
des moyens de commande sont prévus, associés audit moteur pour le bras et audit moteur pour le carrousel, afin de commander le déplacement relatif entre eux de sorte que la coaction de leurs mouvements positionne la cloison (34) de l'une des fioles (14) sous ledit trou (46).

11. Dispositif de positionnement de fioles selon les revendications 1 à 10 ou une combinaison de ces dernières ,
caractérisé en ce que
une paire de bras (72) s'étend perpendiculairement à l'axe longitudinal de ladite partie du corps à l'extrémité opposée à ladite partie profilée (70) empêchant ladite partie de corps de s'étendre totalement à travers ladite ouverture ;
une paire de vis (78) est prévue, chaque vis de ladite paire de vis s'étendant de façon à pouvoir coulisser à travers un bras de ladite paire de bras (72) et est fixée audit élément de support (40) ;
une paire de ressorts hélicoïdaux (76) engage lesdits bras (72), chaque vis de ladite paire de vis (78) s'étendant à travers chacun desdits ressorts hélicoïdaux, rappelant ladite partie de corps (68) à travers ladite ouverture.
